# EUROPEAN PATENT APPLICATION

(11) **EP 4 564 147 A1**
(43) Date of publication of application: **04.06.2025**
(21) Application number: 23845315.3
(22) Date of filing: 12.07.2023
(51) Int. Cl.: G06F 3/0481

(54) **PAGE DISPLAY METHOD AND APPARATUS, AND ELECTRONIC DEVICE AND MEDIUM**

(30) Priority: 26.07.2022 CN 202210887307
(71) Applicant: Beijing Zitiao Network Technology Co., Ltd., Beijing 100190 (CN)
(72) Inventor: ZHANG, Zhixing, Beijing 100028 (CN); ZHENG, Dexuan, Beijing 100028 (CN)
(74) Representative: Dentons UK and Middle East LLP
(86) International application number: PCT/CN2023/106870
(87) International publication number: WO 2024/022102

(57) **Abstract**

Embodiments of the present disclosure provide a page display method and apparatus, an electronic device, and a medium. The method includes: displaying a content browsing page, where the content browsing page includes a target control, and the target control indicates a target attribute; and displaying an updated target control on the content browsing page in response to a browsing parameter on the content browsing page satisfying a set condition, where the updated target control indicates an updated target attribute. The target attribute is applied to a page to be used for interaction, and the page to be used for interaction and the content browsing page are pages of different themes.

## Description

The present disclosure claims priority to Chinese Patent Application No. 202210887307.2, filed with the China National Intellectual Property Administration on July 26, 2022, which is incorporated herein by reference in its entirety.

### FIELD

Embodiments of the present disclosure relate to computer technologies, and for example, to a page display method and apparatus, an electronic device, and a medium.

### BACKGROUND

An application is a computer for completing one or more specific tasks. When running in a user mode, the application can interact with a user, and has a visual user interface. With the development of computer technologies and diversification of user requirements, there are increasing types of applications in electronic devices.

The application has a visual user page. In order to provide a human-computer interaction function for the user, controls are displayed on the page of the application, and the user can implement corresponding functions on the page via the controls.

The application may include a plurality of pages of different themes. However, at present, controls displayed on the pages of the application only have simple functions, which not only affects the richness of the pages, but also results in a poor association between the pages of different themes of the application.

### SUMMARY

The present disclosure provides a page display method and apparatus, an electronic device, and a medium, to improve richness of pages and an association between the pages.

According to a first aspect, an embodiment of the present disclosure provides a page display method. The method includes:
displaying a content browsing page, where the content browsing page includes a target control, and the target control indicates a target attribute; and
displaying an updated target control on the content browsing page in response to a browsing parameter on the content browsing page satisfying a set condition, where the updated target control indicates an updated target attribute.

The target attribute is applied to a page to be used for interaction, and the page to be used for interaction and the content browsing page are pages of different themes.

According to a second aspect, an embodiment of the present disclosure further provides a page display apparatus. The apparatus includes:
a page display module configured to display a content browsing page, where the content browsing page includes a target control, and the target control indicates a target attribute; and
a control display module configured to display an updated target control on the content browsing page in response to a browsing parameter on the content browsing page satisfying a set condition, where the updated target control indicates an updated target attribute.

The target attribute is applied to a page to be used for interaction, and the page to be used for interaction and the content browsing page are pages of different themes.

According to a third aspect, an embodiment of the present disclosure further provides an electronic device. The electronic device includes:
at least one processing apparatus; and
a storage apparatus configured to store at least one program.

The at least one program, when executed by the at least one processing apparatus, causes the at least one processing apparatus to implement the page display method according to the embodiment of the present disclosure.

According to a fourth aspect, an embodiment of the present disclosure further provides a computer-readable medium having stored thereon a computer program that, when executed by a processing apparatus, causes the page display method according to the embodiment of the present disclosure to be implemented.

### BRIEF DESCRIPTION OF THE DRAWINGS

Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a page display method according to an embodiment of the present disclosure;
FIG. 2 is a schematic diagram of implementing a content browsing page according to an embodiment of the present disclosure;
FIG. 3 is a schematic flowchart of a page display method according to an embodiment of the present disclosure;
FIG. 4 is a schematic diagram of an update process of a target control according to an embodiment of the present disclosure;
FIG. 5 is a schematic diagram of implementing a target control according to an embodiment of the present disclosure;
FIG. 6 is a schematic diagram of implementing a set page according to an embodiment of the present disclosure;
FIG. 7 is a schematic diagram of implementing progress information of indicating obtaining of a target attribute according to an embodiment of the present disclosure;
FIG. 8 is a schematic diagram of implementing sixth indication information according to an embodiment of the present disclosure;
FIG. 9 is a schematic diagram of implementing sixth indication information according to an embodiment of the present disclosure;
FIG. 10 is a schematic diagram of a structure of a page display apparatus according to an embodiment of the present disclosure; and
FIG. 11 is a schematic diagram of a structure of an electronic device according to an embodiment of the present disclosure.

### DETAILED DESCRIPTION OF EMBODIMENTS

The embodiments of the present disclosure are described in more detail below with reference to the accompanying drawings.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "at least one".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, a user shall be informed of a type, range of use, use scenarios, etc., of personal information involved in the present disclosure in an appropriate manner in accordance with the relevant laws and regulations, and an authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

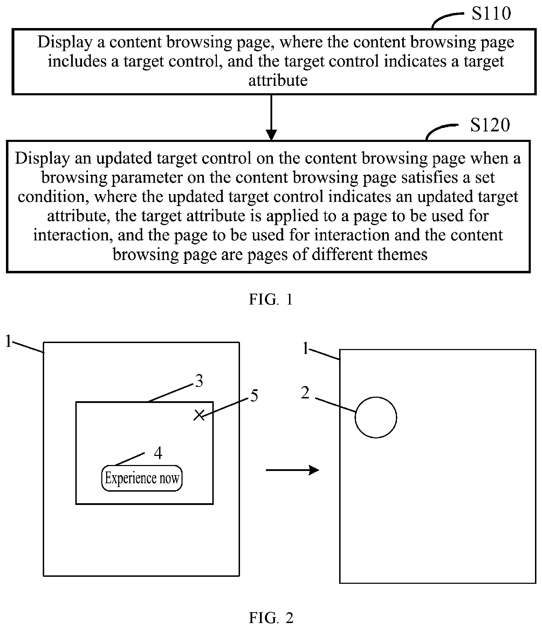

FIG. 1 is a schematic flowchart of a page display method according to an embodiment of the present disclosure. This embodiment of the present disclosure is applicable to a case where a page is displayed to improve an association between pages of different themes. The method may be performed by a page display apparatus. The apparatus may be implemented in the form of software and/or hardware, and optionally, by an electronic device, which may be a mobile terminal, a personal computer (PC), a server, etc.

As shown in FIG. 1, the method includes the following steps.

S110: Display a content browsing page, where the content browsing page includes a target control, and the target control indicates a target attribute.

In this embodiment, a page may be understood as a page in an electronic device for displaying visual content for a user. The content browsing page may be understood as a page in the electronic device for displaying the visual content for the user to browse. The content browsing page may be a page displayed in an application in the electronic device. The application is not limited herein, for example, may be a video application, and the video application may be an application for performing online social communication based on videos. Content on the content browsing page is not limited herein. For example, the content browsing page may include the target control and a displayed video.

The target control may be a control on the content browsing page for user interaction and information display. The target control may indicate the target attribute. Content indicated by the target control is not limited herein. For example, as a control, the target control may indicate the target attribute, time information characterizing a change of the target attribute, a marker associated with the target attribute, etc., using a set region on the target control.

The target attribute may be understood as a level at which an object to be obtained can be multiplied. An attribute value may be understood as a value that can characterize a magnitude feature of the target attribute, for example, may be 5%, 10%, or 20%. For example, the attribute value of 5% may indicate that additional 5% of objects to be obtained may be obtained on the basis of the object to be obtained that should have been obtained. The object to be obtained may be understood as an object that is to be obtained. For example, the object to be obtained may be an object that can be obtained by browsing another task page (i.e., a page to be used for interaction). Content of the object to be obtained is not limited herein, for example, may be a virtual gold coin.

How to display the content browsing page is not limited herein. For example, the content browsing page including the target control may be displayed directly after the application is opened. Alternatively, when the application is opened (for example, the application is opened for the first time after being downloaded), prompt information associated with obtaining the target attribute is first displayed in the form of a pop-up window (such as "The more videos you view, the higher multiplying level of virtual gold coins you can obtain in tasks"), and after a corresponding control (such as "Experience now") in the pop-up window is triggered, the content browsing page including the target control may be displayed. It can be understood that it is alternatively possible to first display, in the form of a pop-up window only when the application is opened for the first time (for example, the application is opened for the first time after being downloaded), prompt information associated with obtaining the target attribute, and then display the content browsing page including the target control after a corresponding control in the pop-up window is triggered.

FIG. 2 is a schematic diagram of implementing a content browsing page according to an embodiment of the present disclosure. As shown in FIG. 2, 1 represents a content browsing page; 2 represents a target control; 3 represents a pop-up window for indicating prompt information associated with obtaining a target attribute; 4 represents a trigger control in the pop-up window; and 5 represents a close control (for closing the currently displayed pop-up window) in the pop-up window. When the application is opened for the first time, the pop-up window 3 for indicating the prompt information associated with obtaining the target attribute may be displayed, and the display content browsing page 1 including the target control 2 may be triggered to be displayed by clicking the trigger control 4 or clicking the close control 5.

In an embodiment, the target control on the content browsing page may be clicked. Response content to a click on the target control is not limited herein, and may be flexibly set according to actual requirements. For example, when different regions or positions of the target control are clicked, corresponding interfaces or text may be displayed, such as text prompt information that is associated with the target attribute and that is displayed in the form of a pop-up window, or an interface associated with the target attribute.

S 120: Display an updated target control on the content browsing page when a browsing parameter on the content browsing page satisfies a set condition, where the updated target control indicates an updated target attribute, the target attribute is applied to the page to be used for interaction, and the page to be used for interaction and the content browsing page are pages of different themes.

In this embodiment, the browsing parameter may be understood as a parameter characterizing a browsing status of the content browsing page. Content of the browsing parameter is not limited herein, for example, may be at least one of duration of browsing content on the content browsing page (such as duration of viewing videos), a quantity of pieces of content browsed on the content browsing page (such as a quantity of viewed videos), etc.

The set condition may be understood as a preset condition associated with an update of the target control. Content of the set condition is not limited herein, for example, may be browsing the content on the content browsing page for set duration (such as 1 minute, 10 minutes, or 30 minutes), browsing a set quantity of pieces (such as 5 or 10 pieces) of content on the content browsing page, or a combination of browsing the content for set duration and browsing a set quantity of pieces of content on the content browsing page.

It can be understood that since a higher level of the target attribute indicates that more objects to be obtained are to be additionally obtained, a target attribute of each level may correspond to a different set condition. That is, a target attribute of a higher level may indicate a higher difficulty of a set condition corresponding to the target attribute. For example, assuming that the level of the target attribute includes 5%, 10%, and 15%, a set condition corresponding to the target attribute of 5% may be that the duration of browsing the content on the content browsing page reaches 1 minute, a set condition corresponding to the target attribute of 10% may be that the duration of browsing the content on the content browsing page reaches 10 minutes, and a set condition corresponding to the target attribute of 15% may be that the duration of browsing the content on the content browsing page reaches 20 minutes.

The updated target attribute may be understood as a corresponding target attribute of a next level in the case where the browsing parameter satisfies the set condition. On this basis, the update may be understood as updating a currently displayed target control that indicates a current target attribute to a target control that indicates the updated target attribute.

In this embodiment, the target attribute may be applied to the page to be used for interaction. How to apply the target attribute to the page to be used for interaction is not limited herein, either. For example, on the page to be used for interaction, the object to be obtained may be obtained by completing a set task (such as browsing the content for the set duration), and the target attribute may be used to additionally obtain, on the basis of the object to be obtained that should have been obtained, the corresponding object to be obtained. For example, if the target attribute is 5%, additional 5% of objects to be obtained may be obtained. The page to be used for interaction is understood as a page on which interaction with a user is to be performed such that the user obtains the object to be obtained. The page to be used for interaction and the content browsing page may be pages of different themes. For example, a theme corresponding to the content browsing page may be obtaining the target attribute by completing a browsing task (such as a video viewing task), while a theme corresponding to the page to be used for interaction may be obtaining, by completing the set task, the object to be obtained.

When the browsing parameter on the content browsing page satisfies the set condition, a set condition corresponding to the target attribute of the next level has been reached, and the current target attribute may be updated to the target attribute of the next level. On this basis, the updated target control may be displayed on the content browsing page, where the updated target control may indicate the updated target attribute. How to display the updated target control on the content browsing page is not limited herein. For example, an update process of the target control may be displayed on the content browsing page in the form of an animation. For example, a change process of text information characterizing the target attribute before and after the update in the target control, a change process of a marker characterizing the target attribute before and after update, etc., may be displayed in the form of an animation.

According to the page display method provided in this embodiment of the present disclosure, the content browsing page is displayed, where the content browsing page includes the target control, and the target control indicates the target attribute. The updated target control is displayed on the content browsing page when the browsing parameter on the content browsing page satisfies the set condition, where the updated target control indicates the updated target attribute. The target attribute is applied to the page to be used for interaction, and the page to be used for interaction and the content browsing page are pages of different themes. According to the method, the target control that may indicate the target attribute is provided on the content browsing page, and the target attribute is applied to the page to be used for interaction, so that an association between pages of different themes can be established. In addition, the updated target control is displayed when the browsing parameter on the content browsing page satisfies the set condition, so that the richness of page display is improved.

Optionally, displaying the updated target control on the content browsing page includes: displaying the update process of the target control on the content browsing page in the form of the animation.

In this embodiment, the animation may be understood as a dynamic picture effect. Content of a picture may be expressed vividly in the form of the animation. For example, the update process of the target control is expressed vividly. How to display the update process of the target control in the form of the animation is not limited herein.

For example, assuming that the marker for identifying the target attribute may be included in the target control, when the browsing parameter on the content browsing page satisfies the set condition, a marker characterizing the target attribute before update may be first moved out of the target control in a sliding manner in any direction (such as an upward direction, a downward direction, or a leftward direction), where the marker is not displayed after being moved out of the target control. On this basis, a marker characterizing the updated target attribute may also be moved, in a sliding manner in any direction, to a region in the target control for setting the marker (i.e., a region where the marker characterizing the target attribute before update is located before moved). It can be understood that the marker characterizing the target attribute before update and the marker characterizing the updated target attribute may be different (such as of different styles).

In the process of moving, out of the target control, the marker characterizing the target attribute before update, a plurality of virtual gold coins may be further displayed at the marker of the target attribute before update in any direction (such as a direction opposite to the moving direction of the marker characterizing the target attribute before update) in the target control (such as in the form of an animation that the virtual gold coins drop from top to bottom). On this basis, after the marker characterizing the updated target attribute is moved to the region in the target control for setting the marker, or after the marker characterizing the target attribute before update is moved out of the target control, prompt information indicating the updated target attribute may be displayed at a side of the target control in the form of a pop-up window.

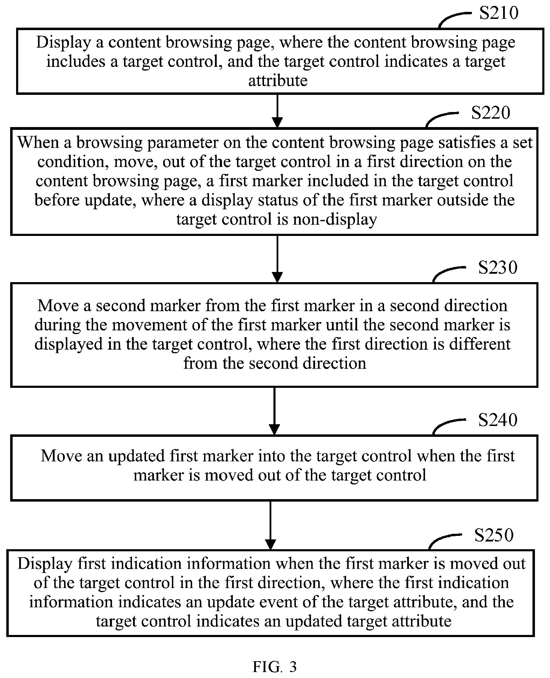

FIG. 3 is a schematic flowchart of a page display method according to an embodiment of the present disclosure. This embodiment is described in detail based on the optional solutions in the above embodiments. In this embodiment, the process of displaying the update process of the target control on the content browsing page in the form of the animation and displaying first indication information is described. It should be noted that for the content not detailed in this embodiment, reference may be made to the above embodiments.

As shown in FIG. 3, the method includes the following steps.

S210: Display a content browsing page, where the content browsing page includes a target control, and the target control indicates a target attribute.

In this embodiment, an electronic device displays the content browsing page for a user to browse corresponding content, where the content browsing page may include the target control, and the target control may indicate the target attribute.

S220: When a browsing parameter on the content browsing page satisfies a set condition, move, out of the target control in a first direction on the content browsing page, a first marker included in the target control before update, where a display status of the first marker outside the target control is non-display.

In this embodiment, the target control before update may be understood as a target control indicating a target attribute that is the target attribute before update. The first marker may be understood as a preset marker that may be used to characterize the target attribute. The first marker is not limited herein in style and size, for example, may be a gift box, an animal animation, or a rocket animation. Target attributes of different levels may correspond to first markers of different styles. For example, target attributes of different levels may correspond to rocket animations in different colours. This is not limited herein. The first direction may be understood as a moving direction in which the first marker is moved out of the target control. The first direction is not limited herein, for example, may be an upward direction, or a rightward direction. The display status may be understood as a status about display on the content browsing page. For example, the display status may include display and non-display.

The terms "central", "upper", "lower", "left", "right", "front", "back", and the like indicate orientational or positional relationships based on those shown in the drawings. For example, "upper" and "lower" are set in a direction of the header and footer of a paper surface, "left" and "right" are set in a direction facing the paper surface, "front" is set in a direction perpendicular to the paper surface and from a paper back to the paper surface; and "back" is set in a direction perpendicular to the paper surface and from the paper surface to the paper back. Such a setting is merely for facilitating the description of the technical solutions of the present disclosure rather than indicating that what is mentioned is required to have a particular orientation, and therefore is not to be construed as a limitation on the present disclosure.

When the browsing parameter on the content browsing page satisfies the set condition, the first marker included in the target control before update may be moved out of the target control in the first direction on the content browsing page. After the first marker is moved out of the target control, the display status of the first marker outside the target control may be non-display, that is, the first marker is not displayed on the content browsing page after being moved out of the target control. How to move the first marker out of the target control is not limited herein. For example, the first marker may be moved out of the target control in a uniform or accelerated sliding manner in the first direction.

S230: Move a second marker from the first marker in a second direction during the movement of the first marker until the second marker is displayed in the target control, where the first direction is different from the second direction.

In this embodiment, the second direction may be understood as a direction in which the second marker is moved. The second direction is different from the first direction. The second direction is not limited herein, for example, may be any other direction different from the first direction, such as a direction opposite to the first direction. The second marker may be understood as a preset marker that may be used to characterize an object to be obtained. Content of the second marker is not limited herein, for example, may be a marker including a plurality of virtual gold coins.

During the movement of the first marker, the second marker may be moved from the first marker (i.e., a position where the first marker is located) in the second direction until the second marker is displayed in the target control. How to move the second marker from the first marker in the second direction is not limited herein. For example, assuming that the first direction is a vertical upward direction and the second direction is a vertical downward direction opposite to the first direction, the second marker may be moved from the first marker in the second direction in a uniform dropping manner during the movement of the first marker until the second marker is displayed in the target control.

In an embodiment, it is alternatively possible to move, after the movement of the first marker before update is completed and before the movement of an updated first marker, the second marker in a set direction (such as a downward direction or an upward direction, as long as the direction is a direction of movement into the target control) from a set position (such as an edge of a region in the target control for setting the first marker, such as an upper edge) in the target control until the second marker is displayed in the target control.

S240: Move the updated first marker into the target control in response to determining that the first marker is moved out of the target control.

In this embodiment, in response to determining that the first marker is moved out of the target control, the updated first marker may be moved into the target control. How to move the updated first marker into the target control is not limited herein. For example, the updated first marker may be moved into the target control from any edge of the target control (for example, assuming that the target control is a circular control, it may be considered that the edge of the target control is a circular edge of the circular control) in any direction (for example, the upward direction or the downward direction, as long as the direction is a direction of movement into the target control, for example, the updated first marker is moved into the target control in the upward direction from a lower circular edge of the circular control). A shape of the target control is not limited, and the target control may include a circular control in which the first marker may be displayed.

In an embodiment, it is alternatively possible to move the updated first marker into the target control during the movement of the first marker. During the movement, in order to avoid an overlap between the first marker before update and the updated first marker, the first marker before update and the updated first markers may be moved in a same direction, and the updated first marker may be moved into the target control from an edge side of the target control opposite to the moving direction of the first marker before update.

S250: Display first indication information in response to determining that the first marker is moved out of the target control in the first direction, where the first indication information indicates an update event of the target attribute, and the target control indicates an updated target attribute.

In this embodiment, the first indication information may be understood as information for indicating the update event of the target attribute. The update event of the target attribute may be understood as an event characterizing an update of the target attribute. A display form of the first indication information is not limited herein, for example, may be the form of a prompt bar (such as Tips) or the form of a pop-up window.

The first indication information may be displayed in response to determining that the first marker is moved out of the target control in the first direction, where the first indication information may indicate the update event of the target attribute, and the target control may indicate the updated target attribute. "In response to determining that the first marker is moved out of the target control in the first direction" may be considered as "at a moment when the first marker starts to be moved out of the target control in the first direction", "in the process of moving the first marker out of the target control in the first direction", or "at a last moment during the movement of the first marker out of the target control in the first direction", which is not limited herein.

How to display the first indication information is not limited herein. For example, the first indication information may be displayed at a side at a set length from the target control. For example, in order to avoid occlusion of the first indication information that is displayed, the first indication information may be displayed at a right side of the target control when the target control is attached to a left-side region of the content browsing page. Accordingly, the first indication information may be displayed at a left side of the target control when the target control is attached to a right-side region of the content browsing page.

In an embodiment, display time of the first indication information is not limited. For example, the first indication information may be displayed in the process of moving the updated first marker into the target control. Alternatively, the first indication information may be directly displayed after the updated first marker is moved into the target control. Alternatively, the first indication information may be displayed within set duration (such as 2s or 5s) after the updated first marker is moved into the target control. Display duration of the first indication information is not limited, either, for example, may be 1 second (s), 3s, or 5s.

According to the page display method provided in this embodiment of the present disclosure, the process of displaying the update process of the target control on the content browsing page in the form of the animation and displaying the first indication information is described. According to the method, the first marker corresponding to the target control before update and the first marker corresponding to an updated target control are moved, and the second marker is moved as the first marker is moved, so that the update process of the target control can be displayed with a dynamic update effect of the first marker and the second marker. On this basis, the first indication information is further displayed to indicate the update event of the target attribute when the first marker is moved out of the target control, so that the richness of page display is further improved.

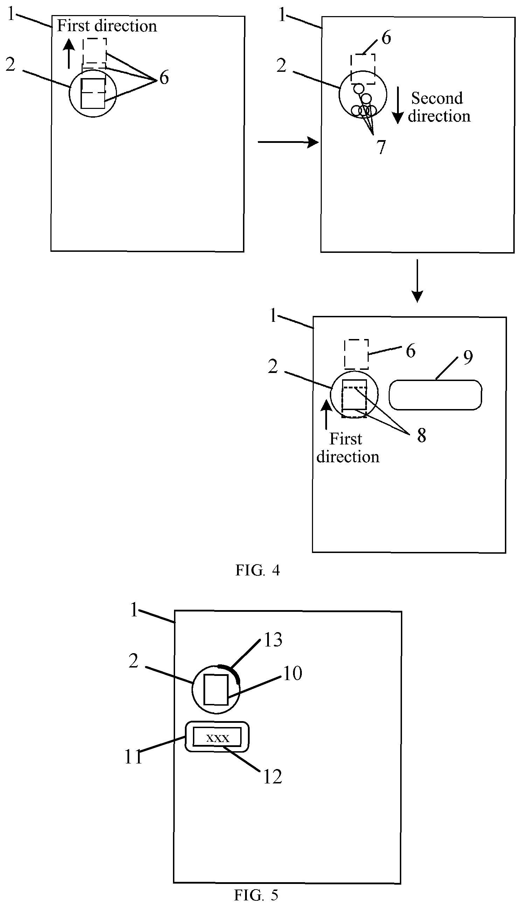

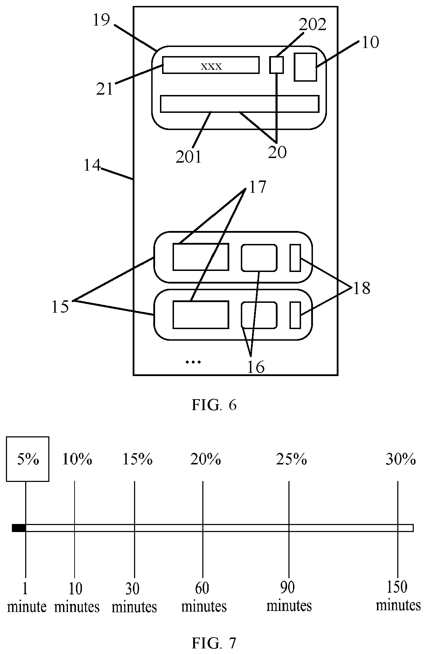

FIG. 4 is a schematic diagram of an update process of a target control according to an embodiment of the present disclosure. As shown in FIG. 4, 6 represents a first marker before update; 7 represents a second marker; 8 represents an updated first marker; and 9 represents first indication information. In the process of moving out the first marker before update 6 in a first direction, the second marker may be moved from the first marker before update 6 in a second direction until the second marker 7 is displayed in the target control 2. On this basis, when the first marker before update 6 is moved out of the target control 2, the updated first marker 8 may be moved from a lower edge of the target control 2 into the target control 2 in the first direction. When the first marker before update 6 is moved out of the target control 2, the first indication information 9 is displayed in a right-side region of the target control 2 (for example, the first indication information 9 may be "Target attribute upgraded").

Optionally, target attributes of different levels correspond to target controls of different styles, a higher level of the target attribute indicates a greater attribute value corresponding to the target attribute, and target controls of different styles correspond to first markers of different styles.

In this embodiment, the target attribute may include different levels, and target attributes of different levels may correspond to target controls of different styles. A style of the target control is not limited herein, for example, may be a circular control or a square control. A size of the target control is not limited, either. An attribute value of the target attribute may be used to measure a level of the target attribute. For example, a higher level of the target attribute indicates a greater attribute value corresponding to the target attribute.

Since target attributes of different levels may correspond to first markers of different styles, and target attributes of different levels may also correspond to target controls of different styles, target controls of different styles may correspond to first markers of different styles.

Optionally, an indication region included in the target control includes second indication information, and the second indication information indicates a current target attribute and/or an obtaining condition of a target attribute of a next level.

In this embodiment, the indication region may be understood as a region in the target control for displaying the second indication information. A position of the indication region is not limited herein. For example, the indication region may be provided directly above the region where the first marker is located, or provided directly below the region where the first marker is located.

The indication region included in the target control may include the second indication information. The second indication information may indicate the current target attribute and/or the obtaining condition of the target attribute of the next level. That is, the second indication information may indicate the current target attribute, may indicate the obtaining condition of the target attribute of the next level, or may indicate the current target attribute and the obtaining condition of the target attribute of the next level, where the current target attribute and the obtaining condition of the target attribute of the next level may be displayed simultaneously or cyclically and alternately.

The current target attribute may be understood as the target attribute before update, and correspondingly, the target attribute of the next level may be understood as the updated target attribute.

The obtaining condition of the target attribute of the next level may be understood as a condition for obtaining the target attribute of the next level. Content of the obtaining condition is not limited herein. For example, the obtaining condition may be current progress information of completing a set condition corresponding to the target attribute of the next level. The obtaining condition may dynamically change as current time changes. For example, assuming that the set condition corresponding to the target attribute of the next level is viewing videos for 10 minutes, if the user has now spent 9 minutes in viewing videos, a current obtaining condition may be that the set condition corresponding to the target attribute of the next level will be completed in 1 minute, for example, may be expressed as "Upgrade after 60 seconds", "Upgrade to x% after 60 seconds", etc. Accordingly, as time passes, the obtaining condition may change dynamically, which is equivalent to a countdown state, such as "Upgrade after 59 seconds", "Upgrade after 58 seconds", and so on.

In an embodiment, assuming that the target control is a circular control, information for indicating a progress indicated by the obtaining condition of the target attribute of the next level may also be set at an edge side of the circular control.

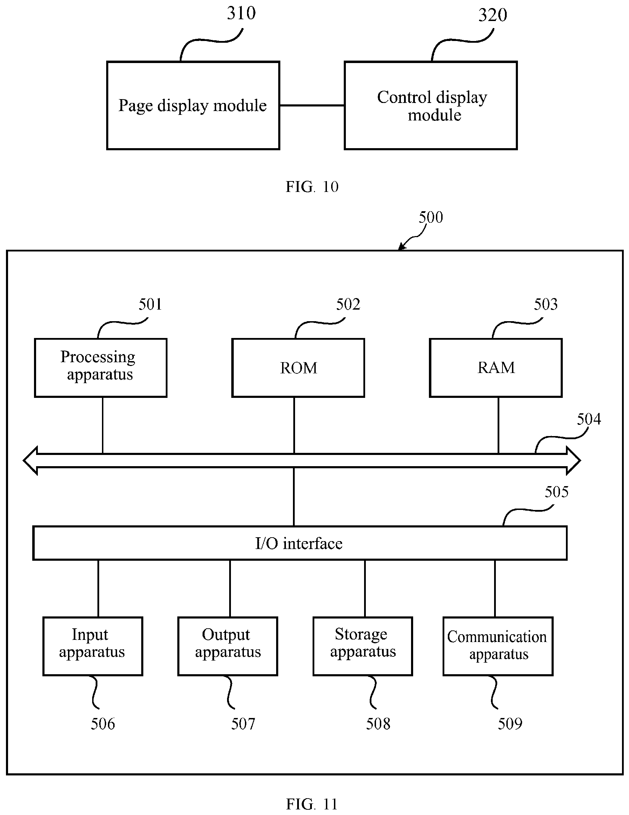

FIG. 5 is a schematic diagram of implementing a target control according to an embodiment of the present disclosure. As shown in FIG. 5, 10 represents a first marker; 11 represents an indication region; 12 represents second indication information; and 13 represents information for indicating a progress indicated by an obtaining condition of a target attribute of a next level. The second indication information 12 in the indication region 11 may indicate a current target attribute and/or the obtaining condition of the target attribute of the next level.

Optionally, displaying the content browsing page includes: displaying the content browsing page including the target control, where the second indication information of the target control cyclically displays the current target attribute and the obtaining condition of the target attribute of the next level in sequence; and displaying the obtaining condition of the target attribute of the next level when an achievement degree of the obtaining condition reaches a set value.

In this embodiment, when the target control includes the second indication information, the content browsing page including the target control is displayed, where the second indication information of the target control may cyclically display the current target attribute and the obtaining condition of the target attribute of the next level in sequence.

How to cyclically display the current target attribute and the obtaining condition of the target attribute of the next level is not limited herein. For example, the obtaining condition of the target attribute of the next level is first displayed for first set duration from a moment when the target attribute has just been updated to the current target attribute; then, the current target attribute is displayed for second set duration; next, the obtaining condition of the target attribute of the next level and the current target attribute are cyclically displayed for the first set duration and the second set duration, respectively, and so on; and when the achievement degree of the obtaining condition reaches the set value, the obtaining condition of the target attribute of the next level is displayed. That is, when the achievement degree of the obtaining condition reaches the set value, the obtaining condition of the target attribute of the next level is displayed, regardless of whether it is time to cyclically display the current target attribute or the obtaining condition of the target attribute of the next level. It is alternatively possible to first display the current target attribute for second set duration and then display the obtaining condition of the target attribute of the next level for first set duration, and so on. The first set duration and the second set duration may be different or the same, which is not limited herein.

The achievement degree of the obtaining condition may be understood as a current progress of completing the set condition corresponding to the target attribute of the next level. The set value may be understood as a preset threshold associated with the obtaining condition (or the set condition), which is not limited herein. For example, the set condition is viewing videos for set duration, and in this case, the set value may be 30 seconds, 1 minute, etc.

In an embodiment, if no target attribute of any level has been obtained currently, the second indication information of the target control may display the obtaining condition of the target attribute of the next level (i.e., an obtaining condition corresponding to a target attribute to be obtained for the first time).

Optionally, the method further includes: displaying a set page in response to a switching operation on the content browsing page, where a theme display region of at least one theme is displayed on the set page; and
after an interaction control in the theme display region is triggered, displaying the page to be used for interaction, where the target attribute is associated with an object to be obtained on the page to be used for interaction, and the object to be obtained is obtained based on the target attribute.

In this embodiment, the switching operation may be understood as a page switching operation. The switching operation is not limited herein. For example, a corresponding switching operation may be triggered by clicking the target control, or by clicking another set control on the content browsing page.

The corresponding set page may be displayed in response to the switching operation on the content browsing page. The set page may be understood as a preset page. For example, the theme display region of the at least one theme may be displayed on the set page. The theme display region may be understood as a region for displaying information that indicates the theme, and a corresponding interaction control.

The interaction control may be understood as a control for displaying the page to be used for interaction. One theme may correspond to one interaction control, and one interaction control may correspond to one page to be used for interaction. Different interaction controls may correspond to different pages to be used for interaction.

After an interaction control in the theme display region is triggered, a corresponding page to be used for interaction may be displayed. In the page to be used for interaction, a corresponding set task may be completed via the corresponding page to be used for interaction, to obtain a corresponding object to be obtained.

The target attribute may be associated with the object to be obtained on the page to be obtained, and the object to be obtained may be obtained based on the target attribute. That is, after a set object to be obtained (for example, a set quantity of virtual gold coins) is obtained on the page to be used for interaction, the corresponding object to be obtained may be obtained additionally based on the current target attribute. For example, if the current target attribute is 5%, additional 5% of set objects to be obtained may be obtained on the basis of the set object to be obtained that should have been obtained on the page to be used for interaction.

Optionally, the method further includes: when a preset condition corresponding to the page to be used for interaction is satisfied, obtaining, based on the target attribute, the object to be obtained that corresponds to the page to be used for interaction.

**In** this embodiment, the preset condition may be understood as a preset condition for obtaining the object to be obtained. Each page to be used for interaction may correspond to a different preset condition. Content of the preset condition is not limited herein. For example, the preset condition may be browsing content for set duration on the page to be used for interaction.

When the preset condition corresponding to the page to be used for interaction is satisfied, the object to be obtained that corresponds to the page to be used for interaction may be obtained based on the target attribute. A different object to be obtained may be obtained on each page to be used for interaction, for example, a quantity of objects to be obtained that are obtained is different.

How to obtain, based on the target attribute, the object to be obtained that corresponds to the page to be used for interaction is not limited herein. For example, after a set quantity of objects to be obtained are obtained, the object to be obtained may be obtained additionally based on the target attribute (for example, additional 5% of the set quantity of objects to be obtained, i.e., "5% * the set quantity of objects to be obtained", are obtained).

Optionally, third indication information is displayed in the theme display region, and the third indication information indicates that an object to be obtained that corresponds to the theme display region is associated with the target attribute.

In this embodiment, the third indication information may be displayed in the theme display region. The third indication information may indicate that the object to be obtained that corresponds to the theme display region is associated with the target attribute. A form of the third indication information is not limited herein. For example, the third indication information may be displayed in the form of a mark, such as an upward arrow mark.

One interaction control may correspond to one piece of third indication information, and each interaction control may correspond to same third indication information. A display position of the third indication information is not limited herein, either. For example, the third indication information may be displayed at a right side or a left side of a corresponding interaction control, where the third indication information may be displayed without overlapping the corresponding interaction control.

In an embodiment, no third indication information may be displayed in the theme display region when no target attribute of any level has been obtained.

Optionally, the set page further includes a target display region, the target display region is a display region of a theme corresponding to the content browsing page, and the target display region includes fourth indication information indicating the target attribute.

In this embodiment, the target display region may be understood as the display region of the theme corresponding to the content browsing page. The target display region includes the fourth indication information indicating the target attribute.

The fourth indication information may indicate progress information of obtaining the target attribute, prompt information characterizing a set condition for obtaining the target attribute, identification information characterizing target attribute-based obtaining of the object to be obtained, etc., which is not limited herein.

The progress information of obtaining the target attribute may be understood as information characterizing a progress of obtaining the target attribute, such as information indicating a level of a target attribute that has been obtained currently. For example, the progress information of obtaining the target attribute may be displayed in the target display region in the form of a progress bar. The prompt information characterizing the set condition for obtaining the target attribute may be associated with the progress information of obtaining the target attribute, may include target attributes of a plurality of set levels and a set condition corresponding to the target attribute of each level, and may be displayed in the target display region in the form of a bubble. The identification information characterizing target attribute-based obtaining of the object to be obtained may include a mark (such as an upward arrow mark the same as the third indication information) characterizing a current state in which the target attribute has been obtained, a mark characterizing a quantity of objects to be obtained that have been obtained additionally based on the target attribute currently, etc.

In an embodiment, when the set page is opened for the first time every set time (such as 1 day), prompt information including the object to be obtained that has been obtained in last set time may be displayed in the form of a pop-up window or a page. For example, when the set page is opened for the first time every day, prompt information including the object to be obtained that has been obtained on a previous day may be displayed in the form of a pop-up window.

In an embodiment, after a target attribute of a highest set level is obtained, it may indicate that a current task of indicating obtaining of the target attribute has been completed. In this case, information indicating a total quantity of objects to be obtained that have been obtained during the task of indicating obtaining of the target attribute (for example, a total of 3000 virtual gold coins have been obtained during the task of indicating obtaining of the target attribute) may be displayed on the content browsing page in the form of a pop-up window or in the form of a page.

FIG. 6 is a schematic diagram of implementing a set page according to an embodiment of the present disclosure. As shown in FIG. 6, 14 represents a set page; 15 represents a theme display region; 16 represents an interaction control; 17 represents information that indicates a theme; 18 represents third indication information; 19 represents a target display region; 20 represents fourth indication information; and 21 represents prompt information (such as "View videos on the content browsing page to upgrade the target attribute. The more videos you view, the higher the level of the target attribute is", or other prompt information). The set page 14 may include the theme display region 15 and the target display region 19.

After the interaction control 16 in the theme display region 15 is triggered, a corresponding page to be used for interaction may be displayed. A display style of the first marker 10 in the target display region 19 may change as the level of the target attribute changes. A background style in the target display region 19 may be fixed (for example, may be a gradient colour style from left to right, or a solid colour style). Alternatively, a background style in the target display region 19 may change as the level of the target attribute changes. For example, different levels of the target attribute may correspond to different background colours in the target display region 19. The fourth indication information 20 may include progress information 201 of indicating obtaining of the target attribute and identification information 202 characterizing target attribute-based obtaining of the object to be obtained.

It should be noted that, when no target attribute has been obtained (which may also be considered as an initial state), the fourth indication information 20 in the target display region 19 may not display the identification information 202 characterizing target attribute-based obtaining of the object to be obtained, to indicate that no target attribute has been obtained.

FIG. 7 is a schematic diagram of implementing the progress information of indicating obtaining of the target attribute according to an embodiment of the present disclosure. As shown in FIG. 7, the level of the target attribute may include 5%, 10%, 15%, 20%, 25%, and 30%. Set conditions for the target levels are viewing videos for 1 minute, viewing videos for 10 minutes, viewing videos for 30 minutes, viewing videos for 60 minutes, viewing videos for 90 minutes, and viewing videos for 150 minutes, respectively. Each time a set condition is completed, a corresponding target attribute may be obtained for application to the page to be used for interaction.

Optionally, the displaying a set page includes:
displaying fifth indication information on the set page in response to determining that the set page is displayed for the first time, where the fifth indication information indicates indication information of a theme corresponding to the content browsing page; and
displaying sixth indication information on the set page in response to determining that the current target attribute is different from a target attribute corresponding to a set page displayed last time, where the sixth indication information indicates a change of the level of the target attribute.

In this embodiment, the fifth indication information may be the indication information of the theme corresponding to the content browsing page. Content of the fifth indication information is not limited herein. For example, the fifth indication information may be information related to how to obtain the target attribute based on the content browsing page, for example, "The longer you view videos on the content browsing page, the higher the level of the obtained target attribute is" or other information. A region for displaying the fourth indication information in the initial state may be further included, where the initial state may be understood as a state in which no target attribute has been obtained.

When the set page is displayed for the first time, the fifth indication information may be displayed on the set page for the user to know how to obtain related information of the target attribute. How to display the fifth indication information is not limited herein. For example, the fifth indication information may be displayed in the form of a pop-up window.

The sixth indication information may indicate the change of the level of the target attribute, that is, a change from a level of the current target attribute (i.e., the target attribute before update) to the target attribute of the next level (i.e., the updated target attribute). The current target attribute may be considered as a target attribute corresponding to a current set page. When the current target attribute is different from the target attribute corresponding to the set page displayed last time, it may be considered that the level of the target attribute is updated on the set page at a current moment.

When the current target attribute is different from the target attribute corresponding to the set page displayed last time, it may indicate that the level of the target attribute corresponding to the current set page is updated, and in this case, the sixth indication information may be displayed on the set page, where the sixth indication information may indicate the change of the level of the target attribute.

How to display the sixth indication information is not limited herein. For example, the sixth indication information may be displayed in the form of a static pop-up window and/or a dynamic pop-up window. The static pop-up window may be understood as having static content displayed in the pop-up window. The dynamic pop-up window may be understood as having dynamic content displayed in the pop-up window, for example, may include a dynamic visual effect of updating and changing the first marker corresponding to the target attribute.

Optionally, the displaying sixth indication information on the set page includes: displaying the sixth indication information in the form of an animation, where the sixth indication information indicates an update process of the first marker corresponding to the target attribute, and an obtained object.

In this embodiment, the obtained object may be understood as an object to be obtained that has been obtained. The update process of the first marker corresponding to the target attribute may be understood as a process of updating the first marker of the target attribute from the first marker corresponding to the target attribute before update to the first marker corresponding to the updated target attribute.

When the current target attribute is different from the target attribute corresponding to the set page displayed last time, the sixth indication information may be displayed on the set page in the form of the animation, where the sixth indication information may indicate the update process of the first marker corresponding to the target attribute, and the obtained object.

How to display the sixth indication information in the form of the animation is not limited herein. For example, for the first marker, the first marker corresponding to the target attribute before update may be moved out of the current set page from a set region (i.e., a preset display region for placing the first marker) in a set direction (such as the upward direction). When the first marker corresponding to the target attribute before update is moved out of the current set page, the first marker corresponding to the updated target attribute may be moved to the set region, to complete a dynamic update process of the first marker corresponding to the target attribute. For example, for the obtained object, during the update process of the first marker corresponding to the target attribute (or after the update of the first marker corresponding to the target attribute, which is not limited herein), a quantity of obtained objects may be displayed on the set page, for example, at a set position above the first marker.

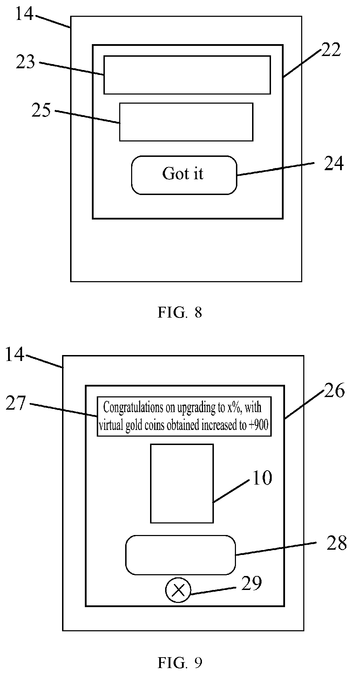

FIG. 8 is a schematic diagram of implementing sixth indication information according to an embodiment of the present disclosure. As shown in FIG. 8, 22 represents fifth indication information; 23 represents a region for displaying fourth indication information in an initial state; 24 represents a trigger control (such as "Got it"); and 25 represents prompt information related to obtaining a target attribute (such as "The longer you view videos on the content browsing page, the higher the level of the obtained target attribute is" or other information). When the set page 14 is displayed for the first time, the fifth indication information 22 may be displayed on the set page 14 in the form of a pop-up window. The set page 14 may be displayed by clicking the trigger control 24.

FIG. 9 is a schematic diagram of implementing sixth indication information according to an embodiment of the present disclosure. As shown in FIG. 9, 26 represents sixth indication information; 27 represents information indicating an obtained object (such as "Congratulations on upgrading to x%, with virtual gold coins obtained increased to +900" or other information); 28 represents a trigger control; and 29 represents a close control. When the current target attribute is different from the target attribute corresponding to the set page displayed last time, the sixth indication information may be displayed on the set page 14 in the form of an animation, where the first marker 10 may display a change process of the target attribute before and after the update in the form of an animation, and the information 27 indicating the obtained object may display a current status of the obtained object. The trigger control 28 may be clicked to skip to the content browsing page, and a corresponding set condition may be completed to upgrade the target attribute. The current sixth indication information 26 may be closed via the close control 29.

FIG. 10 is a schematic diagram of a structure of a page display apparatus according to an embodiment of the present disclosure. As shown in FIG. 10, the apparatus includes a page display module 310 and a control display module 320.

The page display module 310 is configured to display a content browsing page, where the content browsing page includes a target control, and the target control indicates a target attribute.

The control display module 320 is configured to display an updated target control on the content browsing page when a browsing parameter on the content browsing page satisfies a set condition, where the updated target control indicates an updated target attribute.

The target attribute is applied to a page to be used for interaction, and the page to be used for interaction and the content browsing page are pages of different themes.

According to the technical solution provided in this embodiment of the present disclosure, the page display module 310 displays the content browsing page, where the content browsing page includes the target control, and the target control indicates the target attribute. The control display module 320 displays the updated target control on the content browsing page when the browsing parameter on the content browsing page satisfies the set condition, where the updated target control indicates the updated target attribute. The target attribute is applied to the page to be used for interaction, and the page to be used for interaction and the content browsing page are pages of different themes. According to the apparatus, the target control that may indicate the target attribute is provided on the content browsing page, and the target attribute is applied to the page to be used for interaction, so that an association between pages of different themes can be established. In addition, the updated target control is displayed when the browsing parameter on the content browsing page satisfies the set condition, so that the richness of page display is improved.

Optionally, the control display module 320 includes:
a first display unit configured to display an update process of the target control on the content browsing page in the form of an animation.

Optionally, the first display unit includes:
a move-out subunit configured to move, in a first direction, a first marker out of the target control, where the first marker is comprised in the target control before update, and a display status of the first marker outside the target control is non-display;
a first moving subunit configured to move a second marker from the first marker in a second direction during the movement of the first marker until the second marker is displayed in the target control, where the first direction is different from the second direction; and
a second moving subunit configured to move an updated first marker into the target control in response to determining that the first marker is moved out of the target control.

Optionally, the apparatus further includes:
an information display module configured to display first indication information in response to determining that the first marker is moved out of the target control in the first direction, where the first indication information indicates an update event of the target attribute, and the target control indicates the updated target attribute.

Optionally, target attributes of different levels correspond to target controls of different styles, a higher level of the target attribute indicates a greater attribute value corresponding to the target attribute, and target controls of different styles correspond to first markers of different styles.

Optionally, an indication region included in the target control includes second indication information, and the second indication information indicates a current target attribute and/or an obtaining condition of a target attribute of a next level.

Optionally, the page display module 310 includes:
a page display unit configured to display the content browsing page including the target control, where the second indication information of the target control cyclically displays the current target attribute and the obtaining condition of the target attribute of the next level in sequence; and
a condition display unit configured to display the obtaining condition of the target attribute of the next level when an achievement degree of the obtaining condition of the target attribute of the next level reaches a set value.

Optionally, the apparatus further includes:
a response module configured to display a set page in response to a switching operation on the content browsing page, where a theme display region of at least one theme is displayed on the set page; and
a trigger module configured to: after an interaction control in the theme display region is triggered, display the page to be used for interaction, where the target attribute is associated with an object to be obtained on the page to be used for interaction, and the object to be obtained is obtained based on the target attribute.

Optionally, the apparatus further includes:
an object obtaining module configured to obtain, based on the target attribute when a preset condition corresponding to the page to be used for interaction is satisfied, the object to be obtained that corresponds to the page to be used for interaction.

Optionally, third indication information is displayed in the theme display region, and the third indication information indicates that an object to be obtained that corresponds to the theme display region is associated with the target attribute.

Optionally, the set page further includes a target display region, the target display region is a display region of a theme corresponding to the content browsing page, and the target display region includes fourth indication information indicating the target attribute.

Optionally, the response module includes:
a first information display unit configured to display fifth indication information on the set page in response to determining that the set page is displayed for the first time, where the fifth indication information indicates indication information of a theme corresponding to the content browsing page; and
a second information display unit configured to display sixth indication information on the set page when a current target attribute is different from a target attribute corresponding to a set page displayed last time, where the sixth indication information indicates a change of a level of the target attribute.

Optionally, the second information display unit includes:
an information display subunit configured to display the sixth indication information in the form of an animation, where the sixth indication information indicates an update process of a first marker corresponding to the target attribute, and an obtained object.

The page display apparatus provided in this embodiment of the present disclosure can perform the page display method provided in any embodiment of the present disclosure, and has corresponding functional modules for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the protection scope of the embodiments of the present disclosure.

FIG. 11 is a schematic diagram of a structure of an electronic device according to an embodiment of the present disclosure. Reference is made to FIG. 11 below, which is a schematic diagram of a structure of an electronic device 500 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (such as a vehicle navigation terminal), and fixed terminals such as a digital television (TV) and a desktop computer. The electronic device shown in FIG. 11 is merely an example, and shall not impose any limitation on the function and scope of use of the embodiments of the present disclosure.

As shown in FIG. 11, the electronic device 500 may include at least one processing apparatus (e.g., a central processing unit or a graphics processing unit) 501 that may perform a variety of appropriate actions and processing in accordance with a program stored in a read-only memory (ROM) 502 or a program loaded from a storage apparatus 508 into a random access memory (RAM) 503. The RAM 503 further stores various programs and data required for the operation of the electronic device 500. The processing apparatus 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a tape and a hard disk; and a communication apparatus 509. The communication apparatus 509 may allow the electronic device 500 to perform wireless or wired communication with other devices to exchange data. Although FIG. 11 shows the electronic device 500 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 509 and installed, installed from the storage apparatus 508, or installed from the ROM 502. When the computer program is executed by the processing apparatus 501, the above-mentioned functions defined in the method of the embodiment of the present disclosure are performed.

The names of messages or information exchanged between a plurality of apparatuses in the implementations of the present disclosure are used for illustrative purposes only, and are not used to limit the scope of these messages or information.

The electronic device provided in this embodiment of the present disclosure and the page display method provided in the above embodiment belong to the same inventive concept. For the technical details not described in detail in this embodiment, reference may be made to the above embodiment.

An embodiment of the present disclosure provides a computer storage medium having stored thereon a computer program that, when executed by a processing apparatus, causes the page display method provided in the above embodiment to be implemented.

It should be noted that the above computer-readable medium described in the present disclosure may be a computer-readable signal medium, a computer-readable storage medium, or any combination thereof.

The computer storage medium may be a storage medium for computer-executable instructions that, when executed by a computer processing apparatus, are used to perform the method as provided in the present disclosure.

Examples of the computer-readable storage medium may include, but are not limited to: electric, magnetic, optical, electromagnetic, infrared, or semiconductor systems, apparatuses, or devices, or any combination thereof. A more specific example of the computer-readable storage medium may include, but is not limited to: an electrical connection having at least one wire, a portable computer magnetic disk, a hard disk, a random access memory (RAM), a read-only memory (ROM), an erasable programmable read-only memory (EPROM) (or a flash memory, an optical fibre, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, where the data signal carries computer-readable program code. The propagated data signal may be in various forms, including but not limited to an electromagnetic signal, an optical signal, or any suitable combination thereof. The computer-readable signal medium may alternatively be any computer-readable medium other than the computer-readable storage medium. The computer-readable signal medium can send, propagate, or transmit a program used by or in combination with the instruction execution system, apparatus, or device. The program code contained in the computer-readable medium may be transmitted by any suitable medium, including but not limited to: an electric wire, an optical cable, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network (LAN), a wide area network (WAN), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries at least one program, and the at least one program, when executed by the electronic device, causes the electronic device to: display a content browsing page, where the content browsing page includes a target control, and the target control indicates a target attribute; and display an updated target control on the content browsing page when a browsing parameter on the content browsing page satisfies a set condition, where the updated target control indicates an updated target attribute. The target attribute is applied to a page to be used for interaction, and the page to be used for interaction and the content browsing page are pages of different themes.

The computer program code for performing the operations in the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagram in the accompanying drawings illustrate the possibly implemented architecture, functions, and operations of the system, method, and computer program product according to various embodiments of the present disclosure. In this regard, each block in the flowcharts or block diagram may represent a module, program segment, or part of code, and the module, program segment, or part of code contains at least one executable instruction for implementing the specified logical functions. It should also be noted that, in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagram and/or the flowcharts, and a combination of the blocks in the block diagram and/or the flowcharts may be implemented by a dedicated hardware-based system that executes specified functions or operations, or may be implemented by a combination of dedicated hardware and computer instructions.

The related modules or units described in the embodiments of the present disclosure may be implemented by software, or may be implemented by hardware. Names of the modules or the units do not constitute a limitation on the units themselves in some cases, for example, a page display module may alternatively be described as "a module for displaying a content browsing page".

The functions described herein above may be performed at least partially by at least one hardware logic component. For example, without limitation, exemplary types of hardware logic components that may be used include: a field programmable gate array (FPGA), an application-specific integrated circuit (ASIC), application specific standard parts (ASSPs), a system on chip (SOC), a complex programmable logic device (CPLD), etc.

In the context of the present disclosure, a machine-readable medium may be a tangible medium that may include or store a program used by or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of a machine-readable storage medium may include an electrical connection based on at least one wire, a portable computer disk, a hard disk, a random access memory (RAM), a read-only memory (ROM), an erasable programmable read-only memory (EPROM) (or a flash memory), an optic fibre, a portable compact disc read-only memory (CD-ROM), an optical storage device, a magnetic storage device, or any suitable combination thereof.

According to at least one embodiment of the present disclosure, Example 1 provides a page display method, which includes:
displaying a content browsing page, where the content browsing page includes a target control, and the target control indicates a target attribute; and
displaying an updated target control on the content browsing page when a browsing parameter on the content browsing page satisfies a set condition, where the updated target control indicates an updated target attribute.

The target attribute is applied to a page to be used for interaction, and the page to be used for interaction and the content browsing page are pages of different themes.

According to at least one embodiment of the present disclosure, in Example 2, according to the method in Example 1,
the displaying an updated target control on the content browsing page includes:
displaying an update process of the target control on the content browsing page in the form of an animation.

According to at least one embodiment of the present disclosure, in Example 3, according to the method in Example 2,
the displaying an update process of the target control in the form of an animation includes:
moving, in a first direction, a first marker out of the target control, where the first marker is comprised in the target control before update, and a display status of the first marker outside the target control is non-display;
moving a second marker from the first marker in a second direction during the movement of the first marker until the second marker is displayed in the target control, where the first direction is different from the second direction; and
moving an updated first marker into the target control in response to determining that the first marker is moved out of the target control.

According to at least one embodiment of the present disclosure, in Example 4, according to the method in Example 3,
the method further includes:
displaying first indication information in response to determining that the first marker is moved out of the target control in the first direction, where the first indication information indicates an update event of the target attribute, and the target control indicates the updated target attribute.

According to at least one embodiment of the present disclosure, in Example 5, according to the method in Example 1,
target attributes of different levels correspond to target controls of different styles, a higher level of the target attribute indicates a greater attribute value corresponding to the target attribute, and target controls of different styles correspond to first markers of different styles.

According to at least one embodiment of the present disclosure, in Example 6, according to the method in Example 1,
an indication region included in the target control includes second indication information, and the second indication information indicates a current target attribute and/or an obtaining condition of a target attribute of a next level.

According to at least one embodiment of the present disclosure, in Example 7, according to the method in Example 6,
the displaying a content browsing page includes:
displaying the content browsing page including the target control, where the second indication information of the target control cyclically displays the current target attribute and the obtaining condition of the target attribute of the next level in sequence; and
displaying the obtaining condition of the target attribute of the next level when an achievement degree of the obtaining condition of the target attribute of the next level reaches a set value.

According to at least one embodiment of the present disclosure, in Example 8, according to the method in Example 1,
the method further includes:
displaying a set page in response to a switching operation on the content browsing page, where a theme display region of at least one theme is displayed on the set page; and
after an interaction control in the theme display region is triggered, displaying the page to be used for interaction, where the target attribute is associated with an object to be obtained on the page to be used for interaction, and the object to be obtained is obtained based on the target attribute.

According to at least one embodiment of the present disclosure, in Example 9, according to the method in Example 8,
the method further includes:
obtaining, based on the target attribute when a preset condition corresponding to the page to be used for interaction is satisfied, the object to be obtained that corresponds to the page to be used for interaction.

According to at least one embodiment of the present disclosure, in Example 10, according to the method in Example 8,
third indication information is displayed in the theme display region, and the third indication information indicates that an object to be obtained that corresponds to the theme display region is associated with the target attribute.

According to at least one embodiment of the present disclosure, in Example 11, according to the method in Example 8,
the set page further includes a target display region, the target display region is a display region of a theme corresponding to the content browsing page, and the target display region includes fourth indication information indicating the target attribute.

According to at least one embodiment of the present disclosure, in Example 12, according to the method in Example 8,
the displaying a set page includes:
displaying fifth indication information on the set page in response to determining that the set page is displayed for the first time, where the fifth indication information indicates indication information of a theme corresponding to the content browsing page; and
displaying sixth indication information on the set page in response to determining that a current target attribute is different from a target attribute corresponding to a set page displayed last time, where the sixth indication information indicates a change of a level of the target attribute.

According to at least one embodiment of the present disclosure, in Example 13, according to the method in Example 12,
the displaying sixth indication information on the set page includes:
displaying the sixth indication information in the form of an animation, where the sixth indication information indicates an update process of a first marker corresponding to the target attribute, and an obtained object.

According to at least one embodiment of the present disclosure, Example 14 provides a page display apparatus, which includes:
a page display module configured to display a content browsing page, where the content browsing page includes a target control, and the target control indicates a target attribute; and
a control display module configured to display an updated target control on the content browsing page when a browsing parameter on the content browsing page satisfies a set condition, where the updated target control indicates an updated target attribute.

The target attribute is applied to a page to be used for interaction, and the page to be used for interaction and the content browsing page are pages of different themes.

According to at least one embodiment of the present disclosure, Example 15 provides an electronic device, which includes:
one or more processing apparatuses; and
a storage apparatus configured to store one or more programs.

The one or more programs, when executed by the one or more processing apparatuses, cause the one or more processing apparatuses to implement the page display method according to any one of Examples 1 to 13.

According to at least one embodiment of the present disclosure, Example 16 provides a storage medium including computer-executable instructions that, when executed by a computer processing apparatus, are used to perform the page display method according to any one of Examples 1 to 13.

In addition, although the various operations are depicted in a specific order, it should not be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

## Claims

1. A page display method, **characterized by** comprising:
displaying a content browsing page, wherein the content browsing page comprises a target control, and the target control indicates a target attribute; and
displaying an updated target control on the content browsing page in response to a browsing parameter on the content browsing page satisfying a set condition, wherein the updated target control indicates an updated target attribute,
wherein the target attribute is applied to a page to be used for interaction, and the page to be used for interaction and the content browsing page are pages of different themes.

2. The method according to claim 1, **characterized in that** the displaying an updated target control on the content browsing page comprises:
displaying an update process of the target control on the content browsing page in the form of an animation.

3. The method according to claim 2, **characterized in that** the displaying an update process of the target control in the form of an animation comprises:
moving, in a first direction, a first marker out of the target control, wherein the first marker is comprised in the target control before update, and a display status of the first marker outside the target control is non-display;
moving a second marker from the first marker in a second direction during the movement of the first marker until the second marker is displayed in the target control, wherein the first direction is different from the second direction; and
moving an updated first marker into the target control in response to the first marker being moved out of the target control.

4. The method according to claim 3, **characterized by** further comprising:
displaying first indication information in response to determining that the first marker is moved out of the target control in the first direction, wherein the first indication information indicates an update event of the target attribute, and the target control indicates the updated target attribute.

5. The method according to claim 1, **characterized in that** target attributes of different levels correspond to target controls of different styles, a higher level of the target attribute indicates a greater attribute value corresponding to the target attribute, and target controls of different styles correspond to first markers of different styles.

6. The method according to claim 1, **characterized in that** an indication region comprised in the target control comprises second indication information, and the second indication information indicates at least one of a current target attribute and an obtaining condition of a target attribute of a next level.

7. The method according to claim 6, **characterized in that** the displaying a content browsing page comprises:
displaying the content browsing page comprising the target control, wherein the second indication information of the target control cyclically displays the current target attribute and the obtaining condition of the target attribute of the next level in sequence; and
displaying the obtaining condition of the target attribute of the next level in response to an achievement degree of the obtaining condition of the target attribute of the next level reaching a set value.

8. The method according to claim 1, **characterized by** further comprising:
displaying a set page in response to a switching operation on the content browsing page, wherein a theme display region of at least one theme is displayed on the set page; and
after an interaction control in the theme display region is triggered, displaying the page to be used for interaction, wherein the target attribute is associated with an object to be obtained on the page to be used for interaction, and the object to be obtained is obtained based on the target attribute.

9. The method according to claim 8, **characterized by** further comprising:
obtaining, based on the target attribute in response to satisfying a preset condition corresponding to the page to be used for interaction, the object to be obtained that corresponds to the page to be used for interaction.

10. The method according to claim 8, **characterized in that** third indication information is displayed in the theme display region, and the third indication information indicates that an object to be obtained that corresponds to the theme display region is associated with the target attribute.

11. The method according to claim 8, **characterized in that** the set page further comprises a target display region, the target display region is a display region of a theme corresponding to the content browsing page, and the target display region comprises fourth indication information indicating the target attribute.

12. The method according to claim 8, **characterized in that** the displaying a set page comprises:
displaying fifth indication information on the set page in response to determining that the set page is displayed for the first time, wherein the fifth indication information indicates indication information of a theme corresponding to the content browsing page; and
displaying sixth indication information on the set page in response to determining that a current target attribute is different from a target attribute corresponding to a set page displayed last time, wherein the sixth indication information indicates a change of a level of the target attribute.

13. The method according to claim 12, **characterized in that** the displaying sixth indication information on the set page comprises:
displaying the sixth indication information in the form of an animation, wherein the sixth indication information indicates an update process of a first marker corresponding to the target attribute, and an obtained object.

14. A page display apparatus, **characterized by** comprising:
a page display module configured to display a content browsing page, wherein the content browsing page comprises a target control, and the target control indicates a target attribute; and
a control display module configured to display an updated target control on the content browsing page in response to a browsing parameter on the content browsing page satisfying a set condition, wherein the updated target control indicates an updated target attribute,
wherein the target attribute is applied to a page to be used for interaction, and the page to be used for interaction and the content browsing page are pages of different themes.

15. An electronic device, **characterized by** comprising:
at least one processing apparatus; and
a storage apparatus configured to store at least one program, wherein
the at least one program, when executed by the at least one processing apparatus, causes the at least one processing apparatus to implement the page display method according to any one of claims 1 to 13.

16. A storage medium comprising computer-executable instructions that, when executed by a computer processing apparatus, are used to perform the page display method according to any one of claims 1 to 13.
